# EUROPEAN PATENT APPLICATION

(11) **EP 4 016 756 A1**
(43) Date of publication of application: **22.06.2022**
(21) Application number: 20215722.8
(22) Date of filing: 18.12.2020
(51) Int. Cl.: H01R 13/53, H01R 13/58, H02G 15/064

(54) **CABLE CONNECTOR**

(71) Applicant: NKT HV Cables AB, 371 60 Lyckeby (SE)
(72) Inventor: MEYER, Stephan, 26919 Brake (DE); MÜLLER, Peter, 26954 Nordenham (DE); KARABACAK, Mehmet, 26954 Nordenham (DE)
(74) Representative: Kransell & Wennborg KB

(57) **Abstract**

A cable connector (100) for connecting an MV or HV cable to a bushing (150) is described. The bushing (150) includes an opening (152) for inserting the cable. The cable connector (100) includes a bushing insert (110) and a cable adapter (120). An inner surface of the bushing insert (110) includes a conical surface. An outer surface of the cable adapter (120) includes a conical surface. In a connected state, at least a part of the cable adapter (120) is to be positioned within the bushing insert (110), wherein both the bushing insert's conical surface and the cable adapter's conical surface taper off in a direction facing away from the bushing's opening.

## Description

### Field of the disclosure

The present disclosure relates to a cable connector, particularly a cable connector for connecting an MV or HV cable to a bushing. Aspects relate to a method of connecting an MV or HV cable to a bushing via a cable connector.

### Technical background:

Typical cable connectors for connecting MV or HV cables to inner-cone bushings consist essentially of a silicone body having an integrated control element. The control element is for electrical field control of an outer conductive layer edge of the cable. The cable connector is pushed over the prepared cable before connecting the cable to the bushing. A voltage-resistant contact between a conical end-section of the silicone body and a counter cone of the bushing is to be provided. A compression spring is placed on a mounting flange, for creating the necessary contact pressure at the interface between the silicone body and the bushing. The current-carrying connection can be made for example via a lamella contact provided on a terminal of the cable connector. Cable connectors are typically compatible only with cables of specific or of a narrow range of dimensions. To provide connectivity to different cables, a variety of different cable connectors are required.

It is therefore an object of the present disclosure to overcome at least some of the above-mentioned problems in the prior art at least partially.

### Summary of the disclosure

In view of the above, a cable connector for connecting an MV or HV cable to a bushing is provided. The bushing includes an opening for inserting the cable. The cable connector includes a bushing insert and a cable adapter. An inner surface of the bushing insert includes a conical surface. An outer surface of the cable adapter includes a conical surface. In a connected state, at least a part of the cable adapter is to be positioned within the bushing insert, wherein both the bushing insert's conical surface and the cable adapter's conical surface taper off in a direction facing away from the bushing's opening.

According to an aspect of the present disclosure, a method of connecting a MV or HV cable to a bushing via a cable connector as described herein is provided. The method includes pushing the cable adapter onto the cable, inserting the bushing insert into the bushing, and inserting the cable with the cable adapter into the bushing.

Further advantages, features, aspects and details that can be combined with embodiments described herein are evident from the dependent claims, claim combinations, the description and the drawings.

### Brief description of the Figures:

The details will be described in the following with reference to the figures, wherein
- Fig. 1: is a schematic, cross-sectional view of a cable connector and a bushing according to embodiments of the present disclosure;
- Fig. 2: is a schematic, cross-sectional view of a cable connector according to embodiments of the present disclosure, connected to a bushing; and
- Fig. 3: is a diagram illustrating a method of connecting an MV or HV cable to a bushing via a cable connector according to embodiments of the present disclosure;
- Fig. 4: is a schematic, cross-sectional view of components of a cable connector according to embodiments of the present disclosure; and
- Fig. 5: is a schematic, cross-sectional view of a bushing, including a bushing insert of a cable connector according to embodiments of the present disclosure.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can be applied to a corresponding part or aspect in another embodiment as well.

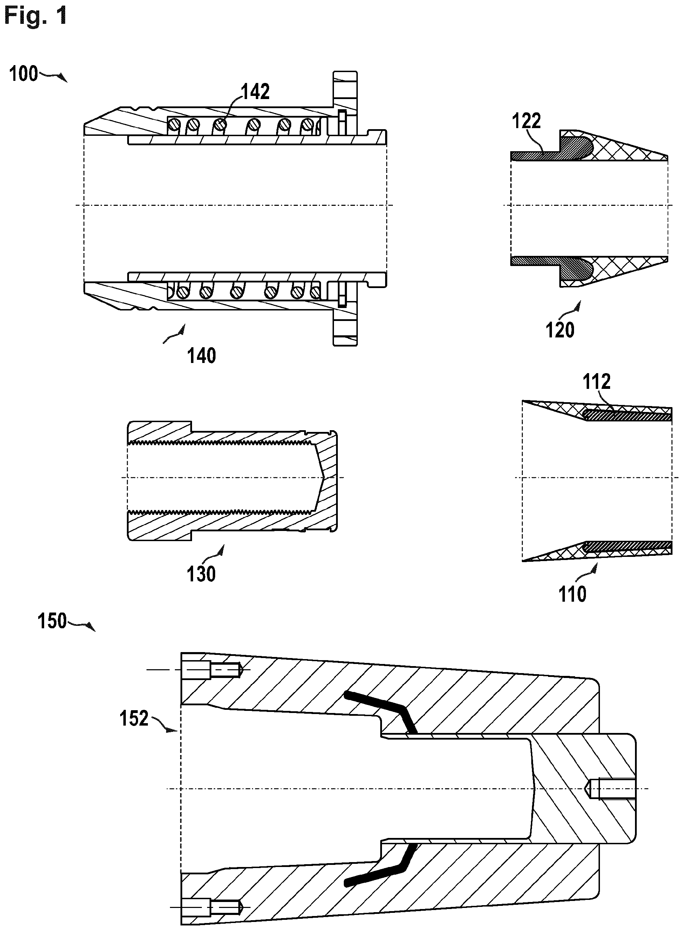

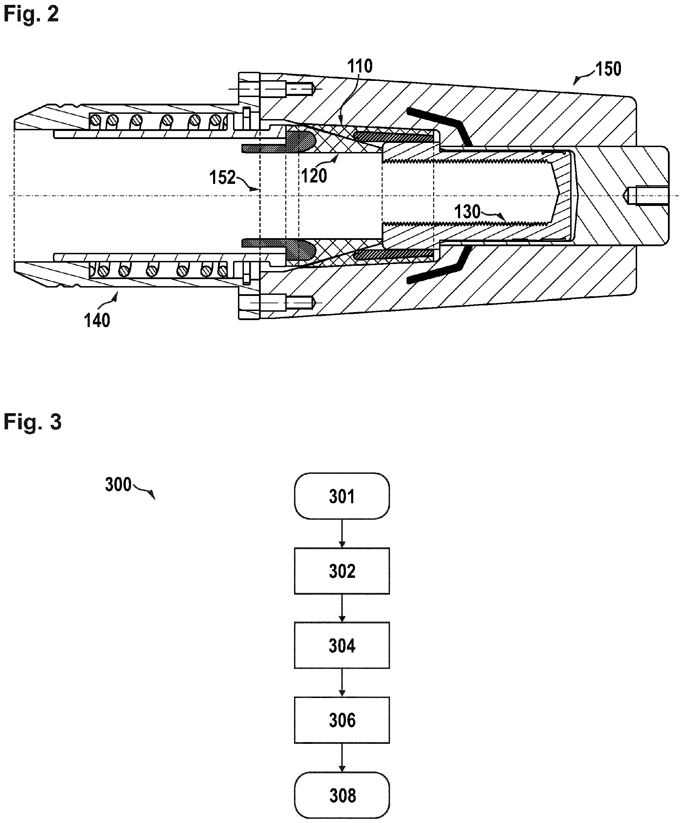

Fig. 1 is a schematic, cross-sectional view of a cable connector and a bushing according to embodiments of the present disclosure. The cable connector 100 is for connecting an MV or HV cable to the bushing 150. The cable connector may be particularly suitable for MV or HV applications with voltages of up to 72,5 kV. A connected state is depicted in Fig. 2. The cable has been omitted in the drawings to enhance clarity.

Generally, MV or HV cables particularly include a conductor, an insulating layer, shield wires, and an outer sheath. More particularly, an inner conductive layer is provided between the conductor and the insulating layer, and an outer conductive layer is provided on an outer side of the insulating layer.

In the context of the present disclosure, a high voltage (HV) is particularly to be understood as a voltage higher than 1 kV for alternating currents or higher than 1,5 kV for direct currents. Additionally, a medium voltage (MV) may be defined as a voltage higher than 1 kV and lower than for example 35 or 38 kV, particularly for alternating currents.

The bushing can be for example a bushing according to any of norms EN 50180, EN 50181 or EN 50673. In particular, an electrical cable connection can be provided for mounting dimensions according to norm EN IEC 62271-209. The bushing 150 includes an opening 152 for inserting the cable. Generally, bushings can provide an electrical connection to apparatus like for example switchgear or transformers.

The cable connector includes a cable adapter 120. In particular, the cable adapter includes a body with a hole for inserting the cable along a first axis. The body may be at least substantially rotationally symmetrical with respect to the first axis. In a connected state, the cable adapter may be in contact, particularly direct contact, with an insulating layer of the cable. The cable adapter may include, particularly consist of, silicone.

In embodiments, the cable adapter 120 includes a control electrode 122. The control electrode may be integrated in the cable adapter. The control electrode is particularly for electrical field control of an edge of an outer conductive layer of the cable.

The cable connector 100 includes a bushing insert 110. In particular, the bushing insert includes a body with a hole for inserting the cable adapter. The bushing insert may be geometrically matched to bushing sizes for example according to any of norms EN 50180, EN 50181, or EN 50673. In a connected state, the bushing insert may be in contact, particularly direct contact, with an inner surface of the bushing. The bushing insert may include, particularly consist of, silicone.

In embodiments, the bushing insert 110 includes a control electrode 112. The control electrode particularly forms a Faraday cage. More particularly, the control electrode is for electrostatically covering a contact element of the cable connector.

An inner surface of the bushing insert 110 includes, particularly is, a conical surface. An outer surface of the cable adapter 120 includes, particularly is, a conical surface. In particular, the bushing insert and the cable adapter have a conical interface to each other in a connected state. The conical surfaces of the bushing insert and of the cable adapter may be at least substantially matched to each other.

In a connected state, at least a part of the cable adapter 120 is to be positioned within the bushing insert 110. In the connected state, the bushing insert may be in contact, particularly direct contact, with the cable adapter 120. In particular, the respective conical surfaces of the bushing insert and the cable adapter may be in direct contact with each other. Particularly in the connected state, both the bushing insert's conical surface and the cable adapter's conical surface taper off in a direction facing away from the bushing's opening 152.

An advantage is that in a connected state, how far the cable adapter 120 protrudes into the the bushing insert 110, depends on a cross-section of the cable. The cable adapter 120 protrudes deeper into the bushing, particularly the bushing insert 110, the smaller the cross-section of the cable is. The conical surfaces at the interface between the cable adapter and the bushing insert can compensate for differences in cable cross-sections. The cable adapter can thus be compatible with cables of different dimensions. Further, the cable adapter can compensate for variations of cable dimensions arising from engineering tolerances.

The cable connector including the cable adapter and the bushing insert can be understood as having a two-part design. The two-part design extends the range of possible applications for the cable connector. Therefore, the number of different cable connectors required for varying applications can be reduced. A greatly reduced number of different cable connectors is required for cables with different cross-sections. Cable connectors according to the present disclosure can be used with greater flexibility than previously known cable connectors.

The cable connector 100 may further include a contact element 130. The contact element is particularly for providing an electrical connection to the conductor of the cable. In particular, the contact element includes a recess for inserting a conductor of the cable.

The cable connector 100 may further include a pressure housing 140. The pressure housing may include a spring insert 142. In a connected state, the spring insert 142 can press the cable adapter against the bushing insert, particularly to provide a voltage-proof interface. More particularly, in a connected state, an axial spring force may act on the cable adapter, causing the cable adapter to press against the bushing insert. The spring insert builds up a beneficial contact pressure at the interface between the cable adapter and the bushing insert.

When the cable adapter is pressed against the bushing insert via an axial force, additionally a radial force is exerted by the cable adapter on the bushing insert, due to the cable adapter's conical surface.

It is an advantage that the spring insert can compensate size changes of the cable or of components of the cable connector or bushing caused for example by temperature fluctuations. A formation of an air gap can be prevented.

In embodiments, a taper angle of the bushing insert's conical surface is larger than for example 5, 10, or 12°. A large taper angle has the advantage that differences in cable cross-section may be compensated by small displacements of the bushing insert relative to the cable adapter. The taper angle may be smaller than for example 50, 35, or 20°. For example, the taper angle may be 14,8, 15,5 or 16,2°.

In embodiments, a taper angle of the cable adapter's conical surface is larger than for example 5, 10, or 12°. The taper angle may be smaller than for example 50, 35, or 20°. A difference to the taper angle of the bushing insert's conical surface may be smaller than for example 8, 4, or 2°.

In embodiments, a taper angle of the bushing insert's conical surface is larger than a taper angle of the cable adapter's conical surface. A corresponding advantage is that when the cable adapter is pushed into the bushing insert, capturing air between the cable adapter and the bushing insert can be avoided. A difference between the respective taper angles may be larger than for example 0,5, 0,8, or 1,0°. For example, the difference may be 1,1 or 1,3°.

In embodiments, in a connected state, the cable adapter 120 is to be in contact, particularly direct contact, with an inner surface of the bushing 150. An air gap can be avoided. A risk of electrical flashover can be reduced or eliminated.

Fig. 2 is a schematic, cross-sectional view of a cable connector 100 according to embodiments of the present disclosure, connected to a bushing 150. The cable connector is particularly a cable connector as described above with regard to Fig. 1.

Fig. 3 is a diagram illustrating a method of connecting an MV or HV cable to a bushing via a cable connector. The cable connector is particularly a cable connector according to embodiments of the present disclosure. The method 300 starts in a block 301.

The method may include preparing the cable by removing an outer sheath, bending the shield wires and connecting an earthing cable lug. In particular, preparing the cable further includes peeling the outer conductive layer and exposing the conductor. The method may include pushing a pressure housing onto the cable, particularly after the cable has been prepared.

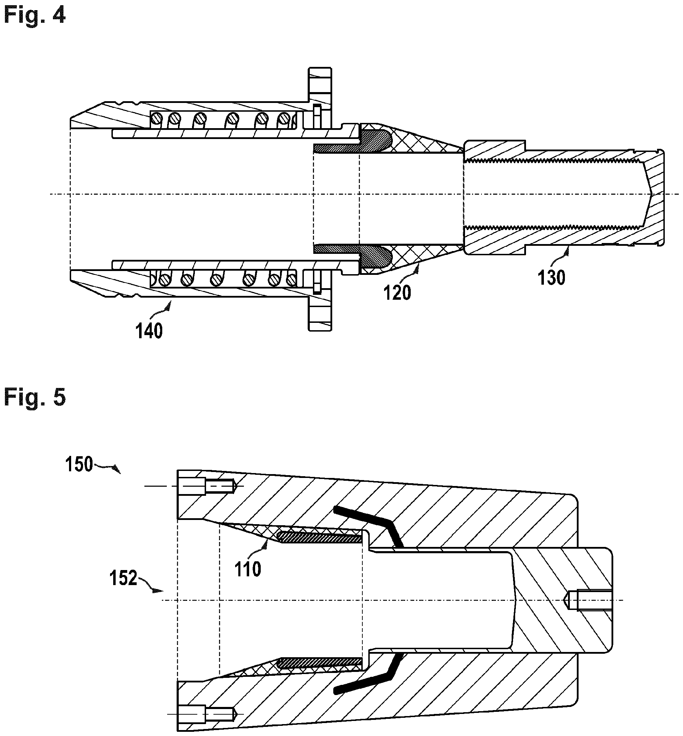

The method 300 includes, in a block 302, pushing a cable adapter onto the cable, particularly after the pressure housing has been pushed onto the cable. The method may include mounting a contact element on the conductor of the cable, particularly after the cable adapter has been pushed onto the cable. An example of a pressure housing, cable adapter and contact element in a configuration before the cable is connected to the bushing is shown in Fig. 4.

The method 300 includes, in a block 304, inserting the bushing insert into the bushing. An exemplary depiction of a bushing after insertion of a bushing insert is provided in Fig. 5.

The method 300 includes, in a block 306, inserting the cable with the cable adapter into the bushing. In particular, the cable is inserted into the bushing with a part of the cable connector. The part of the cable connector may include the cable adapter and the contact element.

The method may include fixing the pressure housing to the bushing, particularly after the cable has been inserted into the bushing. The pressure housing can be fixed to the bushing for example by fastening elements like screws. A connected state of an exemplary cable connector according to the present disclosure is depicted in Fig. 2. The method may further include connecting the shield wires of the cable to electrical ground potential. The method concludes in a block 308.

Fig. 4 is a schematic, cross-sectional view of components of a cable connector according to embodiments of the present disclosure. An exemplary configuration of a pressure housing 140, a cable adapter 120, and a contact element 130 prior to connection of the cable to the bushing is shown.

Fig. 5 is a schematic, cross-sectional view of a bushing, including a bushing insert of a cable connector according to embodiments of the present disclosure. The bushing 150 is depicted in a state after insertion of the bushing insert 110. A cable including a contact element and a cable adapter as described herein can be connected to the bushing 150 via the bushing's opening 152.

## Claims

1. Cable connector for connecting an MV or HV cable to a bushing, the bushing comprising an opening for inserting the cable, the cable connector comprising a bushing insert and a cable adapter, wherein
an inner surface of the bushing insert comprises a conical surface,
wherein
an outer surface of the cable adapter comprises a conical surface,
wherein
in a connected state, at least a part of the cable adapter is to be positioned within the bushing insert, and wherein
both the bushing insert's conical surface and the cable adapter's conical surface taper off in a direction facing away from the bushing's opening.

2. Cable connector according to claim 1, wherein a taper angle of the bushing insert's conical surface is any of: larger than 10° or smaller than 50°.

3. Cable connector according to claim 1, wherein a taper angle of the bushing insert's conical surface is larger than 10° and smaller than 35°.

4. Cable connector according to any of the preceding claims, wherein a taper angle of the cable adapter's conical surface is any of: larger than 10° or smaller than 50°.

5. Cable connector according to any of the preceding claims, wherein a taper angle of the bushing insert's conical surface differs from a taper angle of the cable adapter's conical surface by less than 4°.

6. Cable connector according to any of the preceding claims, wherein a taper angle of the bushing insert's conical surface is larger than a taper angle of the cable adapter's conical surface.

7. Cable connector according to any of the preceding claims, wherein in a connected state, the bushing insert is to be in contact with the cable adapter.

8. Cable connector according to any of the preceding claims, wherein in a connected state, the bushing insert's conical surface is to be at least partly in contact with the cable adapter's conical surface.

9. Cable connector according to any of the preceding claims, wherein in a connected state, the bushing insert is to be in contact with an inner surface of the bushing.

10. Cable connector according to any of the preceding claims, wherein in a connected state, the cable adapter is to be in contact with an inner surface of the bushing.

11. Cable connector according to any of the preceding claims, wherein in a connected state, the cable adapter is to be in contact with an insulating layer of the cable.

12. Cable connector according to any of the preceding claims, wherein the bushing insert comprises a control electrode.

13. Cable connector according to any of the preceding claims, wherein the cable adapter comprises a control electrode.

14. Method of connecting a MV or HV cable to a bushing via a cable connector according to any of the preceding claims, the method comprising:
pushing the cable adapter onto the cable;
inserting the bushing insert into the bushing; and
inserting the cable with the cable adapter into the bushing.

15. Method according to claim 14, further comprising:
mounting a contact element on a conductor of the cable after the cable adapter has been pushed onto the cable.
